# EUROPEAN PATENT APPLICATION

(11) **EP 3 885 472 A1**
(43) Date of publication of application: **29.09.2021**
(21) Application number: 19887541.1
(22) Date of filing: 25.10.2019
(51) Int. Cl.: C25B 15/02

(54) **HYDROGEN PRODUCTION METHOD**

(30) Priority: 19.11.2018 JP 2018216503
(71) Applicant: Asahi Kasei Kabushiki Kaisha, Tokyo 1000006 (JP)
(72) Inventor: UCHINO, Yousuke, Tokyo 100-0006 (JP); ARAI, Hiroyuki, Tokyo 100-0006 (JP); USUI, Taketoshi, Tokyo 100-0006 (JP); OHNO, Jun, Tokyo 100-0006 (JP)
(74) Representative: dompatent von Kreisler Selting Werner - Partnerschaft von Patent- und Rechtsanwälten mbB
(86) International application number: PCT/JP2019/042050
(87) International publication number: WO 2020/105369

(57) **Abstract**

A hydrogen production method of the present embodiment is a hydrogen production method for producing hydrogen through electrolysis of water containing alkali by a water electrolysis system comprising an electrolyzer and a power supply for supplying an electric power to the electrolyzer. The method includes supplying the electric power to the electrolyzer such that an electric current density is 10 Am⁻² or more and less than 1500 Am⁻² in terms of a projected area of a membrane, and an integral value of the electric current density applied is 2000 Ch⁻¹m⁻² or more and 54000 kCh⁻¹m⁻² or less, when the electric power supplied to the electrolyzer decreases.

## Description

### TECHNICAL FIELD

The present disclosure relates to a hydrogen production method.

### BACKGROUND

A method for producing hydrogen through electrolysis of water has been conventionally used. In such a method, electric power is supplied to an electrolyzer to produce hydrogen at an electrode in the electrolyzer. It is known that, if supply of electric power to the electrolyzer is stopped during electrolysis, a flow of a reverse current is generated.

Flows of reverse currents may cause various problems, such as contamination of an electrolytic solution in an electrolyzer, corrosion of an electrolytic device, and degradation of electrodes in the electrolyzer. Solutions to these problems are known in which a current which is weak but is sufficient to prevent generation of a reverse current is conducted when electric power from a power supply is stopped to be supplied (PTLs 1 to 3).

### CITATION LIST

### Patent Literature

PTL 1: JP H10-99861 A
PTL 2: JP S63-11430 A
PTL 3: JP S62-13589 A

### SUMMARY

### (Technical Problem)

Through our endeavor to seek for a method of producing hydrogen, we have discovered the following problem. Specifically, when electric power from a power supply is stopped to be supplied, a voltage equal to or higher than the theoretical decomposition voltage of water is applied to cause a weak current sufficient to prevent a reverse current to be conducted. However, because the amount of gas generated at the electrode is reduced, the proportion of impurity gases in the produced gas increases, causing a relative reduction in the quality of the produced gas. In addition to cases where supply of electric power from the power supply is stopped, we have also discovered that the quality of the gas may be reduced even when supply of electric power decreases.

From the viewpoint of preventing generation of a reverse current to thereby prevent contamination of electrolytic solutions such as an acidic water in an anode compartment and an alkaline water in a cathode compartment, PTL 1 discloses that a weak voltage and/or current which are insufficient to cause electrolysis but can be completely or substantially completely prevent generation of a reverse current is applied between the anode and cathode when a power supply is stopped.

For the purpose of preventing corrosion of an electrolyzer, PTL 2 discloses a method in which a small current which is sufficient to maintain the potential required to prevent corrosion when a main electrolysis current is stopped.

When an anode is immersed in an electrolytic solution without being energized, corrosion of only the anode occurs and a metal oxide is reduced due to a reverse current induced by the potential difference between the anode and the cathode, resulting in problems such as increased consumptions of electrodes. To address these problems, PTL 3 discloses a method to prevent a reverse current. In this method, a very small dc voltage is applied across an anode and a cathode when a dc voltage for electrolysis is stopped, to cause a weak current to be conducted from the anode to the cathode, thereby preventing a reverse current conducting from the cathode to the anode.

The methods described in these patent literatures, however, are aimed at merely preventing reverse currents and thus cannot assure the quality of a gas in a stable manner.

Further, as a countermeasure to problems such as degradation of electrodes due to inclusion of impurity gases in gas produced through water electrolysis, replacing gas inside an electrolyzer with an inert gas when electrolysis stops is contemplated. Replacement with an inert gas, however, increases the density of the inert gas. The gas containing the inert gas needs to be exhausted to the air or the like when supply of electric power is resumed, which may make stable supply of a high-quality gas difficult.

Accordingly, it is thus be helpful to provide a hydrogen production method which enables efficient production of a hydrogen gas having excellent quality even when a supply of electric power from a feed power supply decreases.

### (Solution to Problem)

(1) A hydrogen production method for producing hydrogen through electrolysis of water containing alkali by a water electrolysis system comprising an electrolyzer and a power supply for supplying an electric power to the electrolyzer, the method comprising:
   supplying the electric power to the electrolyzer such that an electric current density is 10 Am⁻² or more and less than 1500 Am⁻² in terms of a projected area of a membrane, and an integral value of the electric current density applied is 2000 Ch⁻¹m⁻² or more and 54000 kCh⁻¹m⁻² or less, when the electric power supplied to the electrolyzer decreases.
(2) The hydrogen production method according to (1), wherein the electric power supplied to the electrolyzer decreases for at least 1 hour or longer within 24 hours.
(3) The hydrogen production method according to (1) or (2), wherein
   the decrease in the electric power supplied to the electrolyzer is a state satisfying at least one selected from the group consisting of:
   a state in which an electric power of less than 100 Wm⁻²Cell⁻¹ is supplied to the electrolyzer for at least consecutive 60 seconds;
   a state in which the electric power decreases at a rate of 10 Ws⁻¹m⁻²Cell⁻¹ or more and an electric power of less than 100 Wm⁻²Cell⁻¹ is supplied to the electrolyzer after the decrease; and
   a state in which an electric power of which integral value for 60 seconds of less than 6000 Wsm⁻²Cell⁻¹ is supplied to the electrolyzer.
(4) The hydrogen production method according to any one of (1) to (3), wherein
   the electric current density upon the decrease in the electric power supplied to the electrolyzer is 0.15% to 50% of that of the electric power supplied before the decrease.
(5) The hydrogen production method according to any one of (1) to (3), wherein
   the electric current density upon the decrease in the electric power supplied to the electrolyzer is 0.15% to 25% of that of the electric power supplied before the decrease.
(6) The hydrogen production method according to any one of (1) to (5), wherein the electric power supplied before the decrease is such that the electric current density is 100 Am⁻² or more in terms of the projected area of the membrane, and the integral value of the electric current density applied is 3600 kCh⁻¹m⁻² or more.
(7) The hydrogen production method according to any one of (1) to (6), wherein the power supply comprises at least two power supplies, and a power supply for supplying the electric power to the electrolyzer is switched upon the decrease.
(8) The hydrogen production method according to any one of (1) to (7), wherein an output from the power supply for supplying the electric power upon the decrease is a constant current.
(9) The hydrogen production method according to any one of (1) to (7), wherein an output waveform from the power supply for supplying the electric power upon the decrease is a square wave.
(10) The hydrogen production method according to any one of (1) to (7), wherein the output waveform from the power supply for supplying the electric power upon the decrease is a sine wave.
(11) The hydrogen production method according to any one of (1) to (7) and (10), wherein the power supply for supplying the electric power upon the decrease is a power supply relying on a solar power output.
(12) The hydrogen production method according to any one of (1) to (7) and (10), wherein the power supply for supplying the electric power upon the decrease is a power supply relying on a wind power output.
(13) The hydrogen production method according to any one of (1) to (12), wherein the power supply for supplying the electric power before the decrease is a power supply relying on at least one renewable energy output selected from the group consisting of wind, solar, hydraulic, tidal, wave, ocean current, and geothermal power outputs.

### (Advantageous Effect)

Because the hydrogen production method of the present disclosure has the above configuration, a hydrogen production method which can efficiently produce a hydrogen gas having excellent quality even when a supply of electric power from a feed power supply decreases can be provided.

### BRIEF DESCRIPTION OF THE DRAWINGS

In the accompanying drawings:
FIG. 1 is a schematic diagram illustrating an example of a water electrolysis system;
FIG. 2 is a schematic diagram illustrating an example of an electrolyzer in the water electrolysis system; and
FIG. 3 is a diagram illustrating a cross section of the electrolytic cell structure of the part of the broken line rectangle in FIG. 2.

### DETAILED DESCRIPTION

The following provides a detailed description of an embodiment of this disclosure (hereinafter, referred to as the "present embodiment"). The present disclosure is, however, not limited to the embodiments disclosed herein, and various modifications can be made within the spirit and scope of the disclosure.

### [Hydrogen production method]

A hydrogen production method of the present embodiment is a hydrogen production method for producing hydrogen through electrolysis of water containing alkali by a water electrolysis system comprising an electrolyzer and a power supply for supplying an electric power to the electrolyzer, the method comprising: supplying the electric power to the electrolyzer such that an electric current density is 10 Am⁻² or more and less than 1500 Am⁻² in terms of a projected area of a membrane, and an integral value of the electric current density applied is 2000 Ch⁻¹m⁻² or more and 54000 kCh⁻¹m⁻² or less, when the electric power supplied to the electrolyzer decreases.

### (Water electrolysis system)

The water electrolysis system includes an electrolyzer and power supplies connected to an anode and a cathode of the electrolyzer. The electrolysis system may further include a rectifier, a detector, an auxiliary power supply controller, an electrolytic solution circulation pump, gas-liquid separation tanks, an electric current meter, an electrolytic solution controller, a gas purifier, and the like.

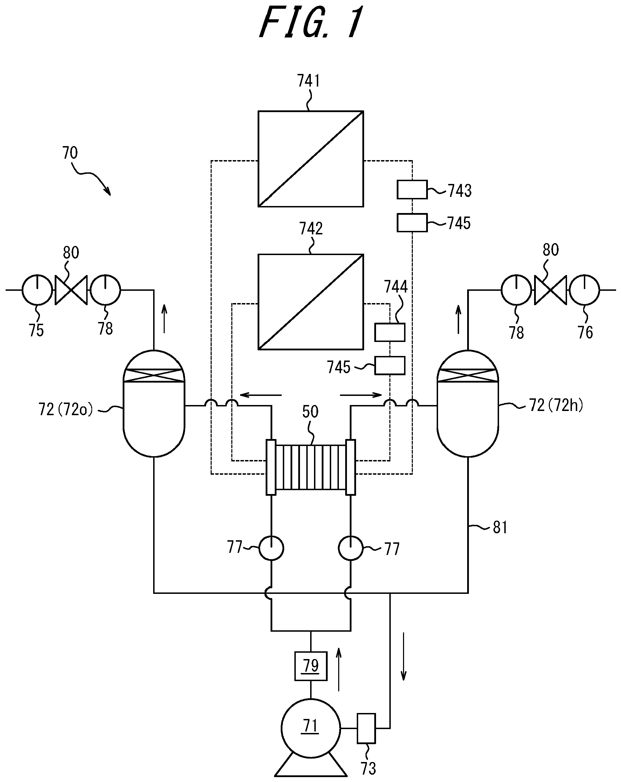

An example of the water electrolysis system is illustrated in FIG. 1.

The water electrolysis system 70 includes an electrolyzer 50, a feed power supply 741, and an auxiliary power supply 742. The feed power supply 741 and the auxiliary power supply 742 are preferably each electrically connected to the anode and the cathode of the electrolyzer 50.

The water electrolysis system 70 preferably further includes a detector 743, an auxiliary power supply controller 744, an electric current meter 745, an electrolytic solution circulation pump 71, gas-liquid separation tanks 72 (72h and 72o), an electrolytic solution controller 73, and the like. In addition to the above members, densitometers 75, 76, flow meters 77, pressure gauges 78, a heat exchanger 79, pressure control valves 80 or the like may be provided.

Note that the arrows in FIG. 1 indicate the directions along which the electrolytic solution or gases flows.

### (Power supply)

The water electrolysis system preferably includes two or more power supplies, and more preferably includes a feed power supply and an auxiliary power supply for supplying electric power when the electric power supplied from the feed power supply to the electrolyzer decreases.

Note that the power supply for supplying electric power before the electric power supplied to the electrolyzer decreases may be the feed power supply.

The feed power supply and the auxiliary power supply may be a single power supply or composed of a plurality of power supplies. For example, one feed power supply and one auxiliary power supply may be provided. Further, the feed power supply and the auxiliary power supply may be each composed of one type of power supply or different types of power supplies.

The feed power supply and the auxiliary power supply are preferably dc power supplies. Further, when multiple power supplies are provided, the power supplies may be connected in series or may be connected in parallel. The feed power supply and the auxiliary power supply are preferably connected to the electrolyzer in respective circuits which are electrically independent from each other.

The feed power supply may be a power supply relying on electric power generated though power generation by an energy source of which output fluctuates such as a renewable energy (variable power supply) or a power supply of which output may be substantially constant (constant power supply), or may be a combination of these. Among these, from the viewpoint that a reverse current associated with an outage of electric power is less likely to occur and the effects of the present disclosure become more remarkable, the feed power supply is preferably a variable power supply, and more preferably a power supply relying on at least one renewable energy output selected from the group consisting of wind, solar, hydraulic, tidal, wave, ocean current, and geothermal power outputs, and even more preferably a power supply relying on a solar power output or a power supply relying on a wind power output. When supply of electric power from a feed power supply is stopped such as upon an outage or when a power supply is stopped, a reverse current may be generated. The hydrogen production method of the present embodiment is thus effective even in the case in which a constant power supply is used as the feed power supply. Examples of the constant power supply include a source of electric power supplied through a grid and a storage battery power supply. The source of electric power supplied through a grid may be a power supply relying on a stable source of electric power such as thermal and nuclear power sources, or may be a combination of a variable power supply such as one relying on a renewable energy output or the like and a power supply relying on stable power supply.

In the case in which the feed power supply is a combination of a constant power supply and a variable power supply, electric power is preferably supplied from the auxiliary power supply in the event that supplies of electric power from the constant power supply and the variable power supply decrease, resulting in a decrease in the total electric power supplied to the electrolyzer.

The auxiliary power supply is not particularly limited as long as it is a power supply capable of supplying electric power such that the electric current density in terms of the projected area of the membrane is 10 Am⁻² or more and less than 1500 Am⁻² and the integral value of the electric current density is 2000 Ch⁻¹m⁻² or more and 54000 kCh⁻¹m⁻² or less, when the electric power supplied from the feed power supply decreases.

The auxiliary power supply may be a power supply relying on electric power generated though power generation by an energy source of which output fluctuates such as a renewable energy (variable power supply) or a power supply of which output may be substantially constant (constant power supply), or may be a combination of these. The variable power supply is preferably a power supply relying on at least one renewable energy output selected from the group consisting of wind, solar, hydraulic, tidal, wave, ocean current, and geothermal power outputs, and even more preferably a power supply relying on a solar power output or a power supply relying on a wind power output. Examples of the constant power supply include a source of electric power supplied through a grid and a storage battery power supply. The source of electric power supplied through a grid may be a power supply relying on a stable source of electric power such as thermal and nuclear power sources, or may be a combination of a variable power supply such as one relying on a renewable energy output or the like and a power supply relying on stable power supply.

The output of electric power supplied from the auxiliary power supply may be a constant current, or the output waveform thereof may be a square wave or a sine wave.

A square wave or a sine wave can reduce the total leakage current which may cause impurity gases. As a result, the amount of impurity gases can be reduced as compared to cases in which a constant power supply is used.

Electric power supplied from the power supplies may be converted to a dc power by a rectifier before it is supplied to the electrolyzer. One rectifier may be provided immediately before the electrolyzer, or rectifiers may be provided between the respective power supplies and the electrolyzer.

### (Electrolyzer)

The electrolyzer is not limited and may be configured as appropriate, and may be a monopolar type consisting of a single electrode element, or a dipolar type consisting of a number of electrode elements. For example, the bipolar method is one method of connecting a large number of bipolar elements to a power supply and is a method in which a plurality of bipolar elements 60 each having an anode 2a as one surface thereof and a cathode 2c as one surface thereof are arranged in the same orientation and connected in series having membranes interposed therebetween, and only both ends thereof are connected to the power supply. One example of the electrolyzer is an electrolyzer having at least one structure in which an anode of one element of two adjacent elements (e.g., an anode terminal element, a bipolar element, a cathode terminal element, and the like) and a cathode of the other element are arranged side by side having a membrane interposed therebetween, for example. Preferably, a membrane is provided between every two adjacent elements in the electrolyzer.

Bipolar electrolyzers have a feature of enabling a small power supply current and can be used to produce a large quantity of a compound, specific substance, or the like through electrolysis in a short time. Since power supply equipment having low current and high voltage is cheaper and more compact when power supply equipment having the same power is compared, the bipolar type is more preferable than the monopolar type from an industrial viewpoint. In addition, the effects of the present disclosure become more remarkable in a bipolar type because a reverse current and impurity gases are more likely to be generated upon an outage of electric power from the feed power supply.

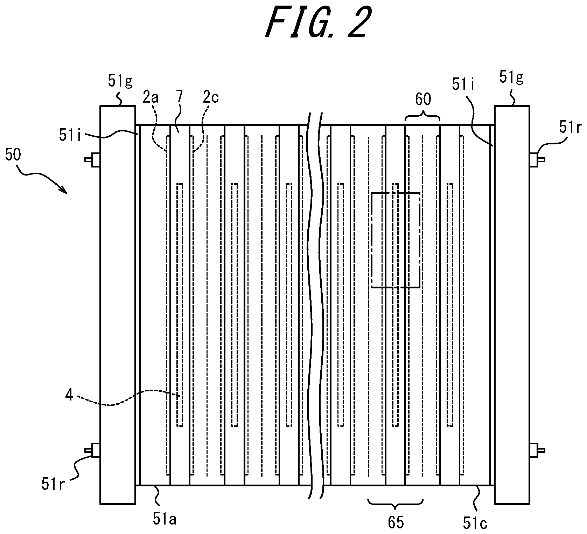

An example of the electrolyzer 50 is illustrated in FIG. 2.

In the example illustrated in FIG. 2, the bipolar electrolyzer includes, from one end thereof, a fast head 51g, an insulating plate 51i, and an anode terminal element 51a that are arranged in order, and further includes an anode-side gasket portion 7, a membrane 4, a cathode-side gasket portion 7, and a bipolar element 60 that are arranged in this order. In this case, the bipolar element 60 is arranged such that the corresponding cathode 2c faces toward the anode terminal element 51a side. Components from anode-side gasket portions 7 up to bipolar elements 60 are repeatedly arranged as many times as required for the designed production quantity. After components from the anode-side gasket portions 7 up to the bipolar element 60 have been arranged repeatedly the required number of times, an anode-side gasket portion 7, a membrane 4, and a cathode-side gasket portion 7 are arranged again, and finally a cathode terminal element 51c, an insulating plate 51i, and a loose head 51g are arranged in this order. The entire structure is then tightened together with a tightening mechanism such as tie rods 51r (see FIG. 2) or a hydraulic cylinder to form a dipolar electrolyzer.

The bipolar elements 60 each include an anode 2a, a cathode 2c, a partition wall 1 separating the anode 2a and the cathode 2c from each other, and an outer frame 3 bordering the partition wall 1. The bipolar elements 60 are stacked one another having the membranes 4 interposed therebetween.

The order of arrangement of the bipolar electrolyzer can be arbitrarily selected from either the anode 2a side or the cathode 2c side and is not limited to the above order.

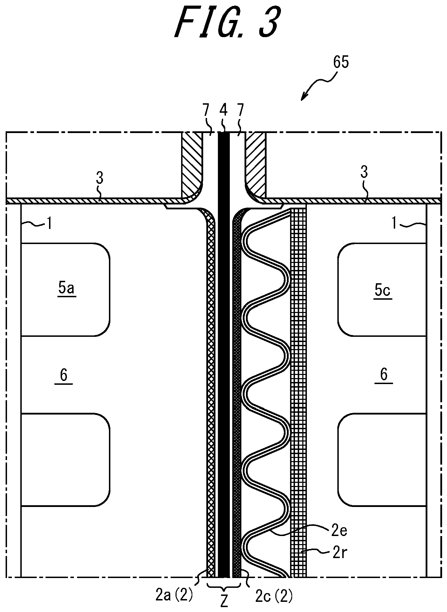

In the electrolyzer, a partition wall 1, an outer frame 3, and a membrane 4 define an electrode compartment 5 through which an electrolytic solution passes (FIG. 3).

In particular, in the bipolar electrolyzer 50 according to the present embodiment, a portion between the partition walls 1 of two adjacent bipolar elements 60 and a portion between the partition walls 1 of each terminal element and of the adjacent bipolar element 60 are respectively referred to as an electrolytic cell 65 (FIG. 3). Each electrolytic cell 65 includes: a partition wall 1, an anode compartment 5a, and an anode 2a of one element; a membrane 4; and a cathode 2c, a cathode compartment 5c, and a partition wall 1 of the other element.

From the viewpoint of enhancing the rigidity of the anode and cathode and forming the structuring resistant to deformation even when being pressed, a rectifying plate 6 (rib) may be provided to each electrode (FIG. 3). Further, for the same reason, a structure of at least three layers may be adopted in which a current collector 2r is attached at the tip of a rectifying plate 6 (rib), a conductive elastic body 2e is attached at an upper surface side of the current collector 2r (i.e., at an opposite side to the partition wall 1 side), and an electrode 2 is stacked at an upper surface side thereof (i.e., at a part that is adjacent to the conductive elastic body 2e and becomes the membrane 4 side).

The number of the electrolytic cells 65 in the electrolyzer is preferably 1 to 300, more preferably 50 to 250, and even more preferably 100 to 200.

A header attached to the electrolyzer is typically disposed as an internal header or an external header, and either type may be adopted .

The internal header type refers to a type in which an electrolyzer 50 and a header (a pipe for distributing or collecting an electrolytic solution) are integrated. The external header type refers to a type in which an electrolyzer 50 and a header (a pipe for distributing or collecting an electrolytic solution) are independent.

The electric capacity of the anode 2a in the electrolyzer is preferably 5000 C/m² to 500000 C/m², and more preferably 50000 C/m² to 300000 C/m². When the electric capacity is equal to or higher than any of the above lower limits, the amount of electricity retained in the anode is prevented from being excessively small. Protection of the anode can be maintained for a sufficient length of time in the case where a square wave or a sine wave is supplied from the auxiliary power supply, which makes effects of the present disclosure further remarkable. When the electric capacity is equal to or less than any of the above upper limits, the amount of electricity for charging the electrode does not become excessively high until protection of the anode is provided, which makes effects of the present disclosure further remarkable.

The electric capacity of the cathode 2c is preferably 200 C/m² to 20000 C/m², and more preferably 500 C/m² to 10000 C/m². The electrical capacities of all the anodes in the electrolyzer are preferably the same. When the electric capacity is equal to or higher than any of the above lower limits, the amount of electricity retained in the cathode is prevented from being excessively small. Protection of the cathode can be maintained for a sufficient length of time in the case where a square wave or a sine wave is supplied from the auxiliary power supply, which makes effects of the present disclosure further remarkable. When the electric capacity is equal to or less than any of the above upper limits, the amount of electricity for charging the electrode does not become excessively high until protection of the cathode is provided, which makes effects of the present disclosure further remarkable.

The area (S1) of the current-carrying surface of the electrolyzer is preferably 0.1 m² to 5 m², and more preferably 1 m² to 3 m². When the area of the current-carrying surface is within any of the above ranges, the relative contribution of a leakage current per electrode is reduced and the electrodes can be protected from a reverse current more easily. Note that the area of the current-carrying surface of the electrolyzer refers to the current-carrying surface of a bipolar element for a bipolar electrolyzer, or refers to a current-carrying surface of a monopolar element 60 for a monopolar electrolyzer, for example. Further, in the case where the bipolar electrolyzer has no bipolar element, the area of the current-carrying surface may be the current-carrying surface of an anode terminal element or a cathode terminal element.

The area S1 of the current-carrying surface of the bipolar element 60 refers to the area of an electrode (anode 2a or cathode 2c) of a bipolar element 60 in the plane parallel to a partition wall 1. Note that all the anodes and all the cathodes in the electrolyzer may have the same area. When the areas of an anode 2a and a cathode 2c are different, the area refers to the average of the areas.

The thickness of the electrolyzer is preferably 2 mm to 100 mm, and more preferably 5 mm to 50 mm.

The thickness of the electrolyzer is the distance between the anode and the cathode at the ends of the electrolyzer (distance including the two electrodes on the ends), and refers to the distance in the direction perpendicular to the electrodes. When the thickness of the electrolyzer is within any of the above ranges, the concentration of the electrolytic solution in the electrolyzer and accumulation of gases are maintained to preferred levels and issues such as local corrosion is less likely to occur.

Hereinafter, components of the electrolyzer will be described in detail below.

### - Partition wall -

The partition wall 1 is preferably made of a material having conductivity from the viewpoint of achieving uniform supply of electric power, and from the perspectives of alkali resistance and heat resistance, preferred materials include nickel, nickel alloy, mild steel, and nickel alloy plated with nickel.

### - Electrode -

In alkaline water electrolysis, the bath voltage includes, in addition to the voltage required for the electrolysis of water that is theoretically determined, an overvoltage of an anode reaction (generating oxygen), an overvoltage of a cathode reaction (generating hydrogen), and a voltage dependent on the distance between the anode 2a and the cathode 2c. As used herein, the term "overvoltage" refers to a voltage that needs to be applied excessively beyond the theoretical decomposition potential to cause a certain current flow, and its value depends on the current value. Electrode 2 with low overvoltage can reduce power consumption for the same current.

To provide low overvoltage properties, the requirements for the electrode 2 include high conductivity, high oxygen generating ability (or hydrogen generating ability), and high wettability of the electrolytic solution on the surfaces of electrodes 2.

It is also noted here that the electrode 2 having low overvoltage properties are less susceptible, even in the case of using an unstable current source such as renewable energy, to corrosion of the substrate and the catalyst layer, detachment of the catalyst layer, dissolution into the electrolytic solution, and adhesion of inclusions to the membrane 4.

The electrodes 2 are preferably porous bodies for increasing the surface areas and promote efficient removal of gases generated through electrolysis from the electrode surfaces. Examples of porous bodies that may be used include a plain weave mesh, a perforated metal, an expanded metal, and a metal foam.

The conductive substrates for the anode and cathode preferably have a mesh structure in view of achieving both a suitable specific surface area as a carrier and defoaming property.

A substrate may be used as an electrode 2, or alternatively, an electrode 2 having a catalyst layer with high reaction activity on the surface of a substrate may be used. However, it is preferable to use an electrode having a catalyst layer with high reaction activity on the surface of a substrate.

The material of the substrate is not particularly limited, but mild steel, stainless steel, nickel, and a nickel-based alloy are preferable because of the resistance to the operating environment.

The catalyst layer of the anode 2a preferably has high oxygen generating ability, and it is possible to use, for example, nickel, cobalt, iron, or a platinum group element. In order to realize desired activity and durability, the catalyst layer can be formed from an elemental metal, a compound such as an oxide, a complex oxide or alloy composed of a plurality of metal elements, or a mixture thereof.

The catalyst layer of the cathode 2c preferably has high hydrogen generating ability, and it is possible to use, for example, nickel, cobalt, iron, or a platinum group element.

### - Membrane -

An ion permeable membrane 4 is used as the membrane 4 to separate generated gases such as hydrogen gas and oxygen gas while permitting passage of ions. An ion exchange membrane having ion exchange ability or a porous membrane capable of permeating the electrolytic solution can be used as this ion permeable membrane 4. The ion permeable membrane 4 preferably has low gas permeability, high ionic conductivity, low electronic conductivity, and high strength.

The projected area of the membrane 4 is preferably 0.1 m² to 5 m², and more preferably 1 m² to 3 m². When the projected area of the membrane is within any of the above ranges, the electrodes can be protected from a reverse current more easily. Accordingly, a high-quality hydrogen gas can be produced more efficiently even when supply of electric power from the feed power supply decreases.

The projected area of the membrane 4 refers to the area of the shadow projected on the ground when the membrane 4 is placed horizontally with respect to the ground and is illuminated with parallel light from above in the vertical direction.

### (Detector)

The detector 743 is not particularly limited and may be configured as appropriate.

The detector 743 can detect that supply of electric power from the feed power supply 741 is stopped or decreases. Preferably, the detector 743 can further detect that electric power from the feed power supply 741 is started to be supplied.

### (Auxiliary power supply controller)

The auxiliary power supply controller 744 is not particularly limited and may be configured as appropriate.

The auxiliary power supply controller 744 can start or stop the auxiliary power supply 742. The auxiliary power supply controller 744 can also control an output from the auxiliary power supply. For example, the auxiliary power supply 742 may be started when supply of electric power from the feed power supply 741 decreases, or the auxiliary power supply 742 may be stopped when supply of electric power from the feed power supply 741 is recovered.

### (Electric current meter)

The electric current meter 745 is not particularly limited and may be configured as appropriate.

The electric current meter 745 can measure the value of electric current conducting through the water electrolysis system 70. The electric current meter 745 is connected to the auxiliary power supply controller 744, the electrolytic solution controller 73, or the like, and a value of electric current may be used to adjust an output from the feed power supply, an output from the auxiliary electric power, the flow rate of the electrolytic solution, and the like.

An electric current meter 745 may be provided in the circuit between the feed power supply 741 and the electrolyzer 50 and/or in the circuit between the auxiliary power supply 742 and the electrolyzer 50.

The electric current meter 745 provided in the circuit for feed power supply 741 may be integrated with the feed power supply 741 and/or the detector 743. The electric current meter 745 provided in the circuit for the auxiliary power supply 742 may be integrated with the auxiliary power supply 742 and/or the auxiliary power supply controller 744.

### (Electrolytic solution circulation pump)

The electrolytic solution circulation pump 71 is not particularly limited and may be configured as appropriate.

The electrolytic solution circulating pump 71 makes the electrolytic solution flowing through the electrolyzer 50 and the piping 81 to be circulated.

### (Electrolytic solution controller)

The electrolytic solution controller 73 is not particularly limited and may be configured as appropriate.

The electrolytic solution controller 73 can adjust the flow rate of the electrolytic solution. The electrolytic solution controller 73 may be integrated with the electrolytic solution circulating pump 71.

The flow rate of the electrolytic solution is preferably controlled according to a value of electric current measured by the electric current meter 745 or the like.

### (Gas-liquid separation tank)

The gas-liquid separation tanks 72 are preferably tanks for separating the electrolytic solution and gases generated in the electrolyzer, and are preferably an anode-side gas-liquid separation tank 72o for separating gas generated at the anode of the electrolyzer and the electrolytic solution and a cathode-side gas-liquid separation tank 72h for separating gas and generated at the cathode of the electrolyzer and the electrolytic solution.

For example, in the hydrogen production method of the present embodiment, oxygen is generated at the anode and hydrogen at the cathode in the electrolyzer. In this case, the anode-side gas-liquid separation tank 72o is an oxygen separation tank and the cathode-side gas-liquid separation tank 72h is a hydrogen separation tank.

### (Piping)

The piping 81 is not particularly limited and may be configured as appropriate.

The piping 81 is piping which permits the electrolytic solution to flow out of the electrolyzer 50. For example, as illustrated in FIG. 1, it can connect between the electrolyzer 50 and the gas-liquid separation tank 72, between the gas-liquid separation tank 72 and the electrolytic solution circulation pump 71, and between the electrolytic solution circulation pump 71 and the electrolyzer 50.

Note that the gases separated by the gas-liquid separation tanks 72 are preferably lead to the pressure gauges 78, the pressure control valves 80, the densitometers 75, 76 through piping used for gases.

The water electrolysis system can be used to carry out water electrolysis.

### [Hydrogen production method]

Examples of the hydrogen production method of the present embodiment include a method using the water electrolysis system.

In the hydrogen production method of the present embodiment, the expression "when electric power supplied to the electrolyzer decreases" may refer to a situation where electric power supplied from the feed power supply decreases or a situation where any of the following (i) to (iii) is satisfied.

In the hydrogen production method of the present embodiment, the term "decrease" in "when electric power supplied to the electrolyzer decreases" is preferably a state satisfying at least one condition selected from the group consisting of: (i) a state in which an electric power of less than 100 Wm⁻²Cell⁻¹ is supplied to the electrolyzer for at least consecutive 60 seconds; (ii) a state in which the electric power decreases at a rate of 10 Ws⁻¹m⁻²Cell⁻¹ or more and an electric power of less than 100 Wm⁻²Cell⁻¹ is supplied to the electrolyzer after the decrease; and (iii) a state in which an electric power of which integral value for 60 seconds is less than 6000 Wsm⁻²Cell⁻¹ is supplied to the electrolyzer. Note that "before the decrease" refers to the state before any of the state (i) to (iii) occurs.

Here, the "cell" means one electrolytic cell.

The state (i) continues for preferably at least 70 seconds (more preferably 80 seconds, even more preferably 90 seconds, and particularly preferably 100 seconds). In addition, the duration may be at least 30 seconds. Further, the state is the state where an electric power of preferably 90 Wm⁻²Cell⁻¹ or less (more preferably 80 Wm⁻²Cell⁻¹ or less, even more preferably 70 Wm⁻²Cell⁻¹ or less, and particularly preferably 60 Wm⁻²Cell⁻¹ or less) is supplied to the electrolyzer. Further, the value may be 150 Wm⁻²Cell⁻¹ or less.

The state (ii) is the state where the electric power decreases at a rate of preferably 11 Ws⁻¹m⁻²Cell⁻¹ or more (more preferably 15 Ws⁻¹m⁻²Cell⁻¹ or more, even more preferably 20 Ws⁻¹m⁻²Cell⁻¹ or more, and particularly preferably 25 Ws⁻¹m⁻²Cell⁻¹ or more), and an electric power of preferably 90 Wm⁻²Cell⁻¹ or less (more preferably 80 Wm⁻²Cell⁻¹ or less, even more preferably 70 Wm⁻²Cell⁻¹ or less, and particularly preferably 60 Wm⁻²Cell⁻¹ or less) is supplied to the electrolyzer after the decrease. Further, the value may be 150 Wm⁻²Cell⁻¹ or less.

The state (iii) is the state where an electric power having an integration value for 60 seconds of preferably 5800 Wsm⁻²Cell⁻¹ or less (more preferably 5500 Wsm⁻²Cell⁻¹ or less, even more preferably 5000 Wsm⁻²Cell⁻¹ or less, and particularly preferably 4500 Wsm⁻²Cell⁻¹ or less) is supplied to the electrolyzer. Further, the integral value may be an integral value for 30 seconds.

In the state (i) "when electric power supplied to the electrolyzer decreases", the power supplied to the electrolyzer preferably continues for at least 60 seconds (more preferably 70 seconds, more preferably 80 seconds, even more preferably 90 seconds, and particularly preferably 100 seconds). Also, the duration may be for at least 30 seconds. Further, an electric power of preferably less than 100 Wm⁻² (more preferably 90 Wm⁻² or less, even more preferably 80 Wm⁻² or less, even more preferably 70 Wm⁻² or less, and particularly preferably 60 Wm⁻² or less) is supplied to the electrolyzer. Further, the value may be 150 Wm⁻² or less.

The state (ii) is the state where the electric power decreases at a rate of preferably 10 Ws⁻¹m⁻² or more (more preferably 11 Ws⁻¹m⁻² or more, even more preferably 15 Ws⁻¹m⁻² or more, even more preferably 20 Ws⁻¹m⁻² or more, and particularly 25 Ws⁻¹m⁻² or more), and an electric power of preferably less than 100 Wm⁻² (more preferably 90 Wm⁻² or less, even more preferably 80 Wm⁻² or less, even more preferably 70 Wm⁻² or less, and particularly preferably 60 Wm⁻² or less) is supplied to the electrolyzer after the decrease. Further, the value may be 150 Wm⁻² or less.

The state (iii) is the state where an electric power is supplied to the electrolyzer such that the integral value for 60 seconds is preferably 6000 Wsm⁻² or less (more preferably 5800 Wsm⁻² or less, even more preferably 5500 Wsm⁻² or less, even more preferably 5000 Wsm⁻² or less, and particularly preferably 4500 Wsm⁻² or less). Further, the integral value may be an integral value of 30 seconds.

The electric current density supplied to the electrolyzer upon the decrease is 10 Am⁻² or more and less than 1500 Am⁻², preferably 50 Am⁻² or more and 1250 Am⁻² or less, and more preferably 100 Am⁻² or more and 1000 Am⁻² or less, in terms of the projected area of the membrane. An electric current density lower than any of the above upper limits is preferable from the viewpoint of the cost and energy conservation because the electric current upon the decrease can be reduced. This effect becomes more remarkable in the case where a variable power supply such as a power supply relying on renewable energy output is used, because the decreased state may last for long time. Further, an electric current density high than any of the lower limits can enable efficient production of gas having excellent quality.

Further, the electric current density supplied to the electrolyzer upon the decrease is preferably less than 10 Am⁻²Cell⁻¹ or more and less than 1500 Am⁻²Cell⁻¹, more preferably 50 Am⁻²Cell⁻¹ or more and 1250 Am⁻²Cell⁻¹ or less, and even more preferably 100 Am⁻²Cell⁻¹ or more and 1000 Am⁻²Cell⁻¹ or less, in terms of the projected area of the membrane.

The current supplied to the electrolyzer upon the decrease is preferably lower than the current supplied to the electrolyzer before the decrease.

An electric power is supplied to the electrolyzer upon the decrease such that the integral value of the electric current density applied is 2000 Ch⁻¹m⁻² or more and 54000 kCh⁻¹m⁻² or less, preferably 4000 Ch⁻¹m⁻² or more and 27000 kCh⁻¹m⁻² or less, and more preferably 8000 Ch⁻¹m⁻² or more and 5400 kCh⁻¹m⁻² or less. An electric current density lower than any of the above upper limits is preferable from the viewpoint of the cost and energy conservation because the electric current upon the decrease can be reduced. This effect becomes more remarkable in the case where a variable power supply such as a power supply relying on renewable energy output is used, because the decreased state may last for long time. Further, an electric current density high than any of the lower limits can enable efficient production of gas having excellent quality.

An electric power is supplied to the electrolyzer upon the decrease such that the integral value of the electric current density applied is preferably 2000 Ch⁻¹m⁻²Cell⁻¹ or more and 54000 kCh⁻¹m⁻²Cell⁻¹ or less, more preferably 4000 Ch⁻¹m⁻²Cell⁻¹ or more and 27000 kCh⁻¹m⁻²Cell⁻¹ or less, and even more preferably 8000 Ch⁻¹m⁻²Cell⁻¹ or more and 5400 kCh⁻¹m⁻²Cell⁻¹ or less.

As used herein, the term "electric current density" in the "integral value of the electric current density" refers to the electric current density in terms of the projected area of the membrane. Further, the integral value of the electric current density refers to the integral value per unit time, and may be a converted value per hour if the duration to supply electric power is less than 1 hour.

The electric current density supplied to the electrolyzer before the decrease is preferably 100 Am⁻² or more, more preferably 200 Am⁻² or more, even more preferably 500 Am⁻² or more, and particularly preferably 1000 Am⁻² or more, in terms of the projected area of the membrane. Note that "before the decrease" refers to the state before the state (i) to (iii) is initiated.

The integral value of the electric current density supplied to the electrolyzer before the decrease is preferably 3600 kCh⁻¹m⁻² or more, more preferably 5000 kCh⁻¹m⁻² or more, even more preferably 7500 kCh⁻¹m⁻² or more, and particularly preferably 10000 kCh⁻¹m⁻² or more.

The electric power density supplied to the electrolyzer before the decrease is preferably 0.5 kW/m² to 40 kW/m², and more preferably 5 kW/m² to 30 kW/m².

In the hydrogen production method of the present embodiment, the power supply for supplying electric power to the electrolyzer is preferably switched upon a decrease in supply of electric power. Switching the power supply includes switching the power supply that supplies electric power before the decrease to another power supply, and adding electric power from another power supply to that of the power supply that supplies electric power before the decrease. For example, when the electric power supplied from the feed power supply decreases, electric power may be supplied only from the auxiliary power supply by stopping the feed power supply, or electric power may be supplied from the auxiliary power supply in addition to electric power from the feed power supply.

The electric power supplied to the electrolyzer before the decrease is preferably greater than the electric power supplied upon the decrease.

The electric current density when electric power supplied to the electrolyzer decreases is preferably 0.15% or more, more preferably 0.5% or more, even more preferably 1% or more, and particularly preferably 5% or more, and is preferably 50% or less, more preferably 25% or less, even more preferably 20% or less, and particularly preferably 15% or less, of the electric current density that had been supplied before the decrease.

The effects become more remarkable in the case where the duration of the decrease in electric power supplied to the electrolyzer is preferably at least 1 hour or longer, more preferably 5 hours or longer, and even more preferably 10 hours or longer, within 24 consecutive hours. The duration of the decrease may be a continuous duration or may be the sum of durations of the decreased state within 24 hours. When the duration of the decrease is at least 1 hour or longer, reduction in the gas quality after re-energization can be suppressed as compared with cases where the duration is less than 1 hour.

Note that the duration of the decrease in electric power is defined as the duration from the point in time when any of (i) to (iii) described above is satisfied to the point in time when the source of electric power is returned to the feed power supply (or when it becomes possible to supply an electric power of 50 kWm⁻²Cell⁻¹ or more (preferably 100 kWm⁻²Cell⁻¹ or more) to the electrolyzer), for example.

In the hydrogen production method of the present embodiment, the source of electric power may be returned to the feed power supply at any timing when the decrease is eliminated (e.g., when it becomes possible to supply an electric power of 50k Wm⁻²Cell⁻¹ or more (preferably 100k Wm⁻²Cell⁻¹ or more) to the electrolyzer, and the like), for example.

Further, in the case where the decrease can be eliminated by combining the feed power supply and the auxiliary power supply, electric power may be supplied from the feed power supply and the auxiliary power supply at any timing.

The hydrogen production method of the present embodiment may be a hydrogen production method in which water containing alkali is subjected to water electrolysis in the electrolyzer to produce hydrogen. The water containing alkali may be an alkaline water solution containing an alkali salt dissolved therein, and examples include a water solution of NaOH and a water solution of KOH.

In the hydrogen production method of the present embodiment, the volume ratio of hydrogen in the gas obtained at the cathode upon the decrease is preferably 99.90 volume% or more and more preferably 99.99 volume% or more, relative to the total amount of the gas (taken to be 100 volume%). Further, the volume ratio of oxygen in the gas obtained at the anode upon the decrease is preferably 99.90 volume% or more and more preferably 99.99 volume% or more, relative to the total amount of the gas (taken to be 100 volume%).

The volume ratio of oxygen to the volume of hydrogen in the gas obtained at the cathode is preferably 99.90 volume% or less and more preferably 99.99 volume% or less, relative to the total amount of the gas (taken to be 100 volume%). Further, the volume ratio of hydrogen to the volume of oxygen in the gas obtained at the anode is preferably 0.01 volume% or less and more preferably 0.001 volume% or less, relative to the total amount of the gas (taken to be 100 volume%).

The volume ratio of nitrogen gas in the gas obtained at the cathode and/or the gas obtained at the anode is preferably 1000 ppm by volume or less and more preferably 100 ppm by volume or less, and even more preferably the gas is substantially free of nitrogen. Note that the term "substantially free of nitrogen" refers to a case in which no nitrogen is intentionally blended except for nitrogen unavoidably included.

In particular, the gases obtained upon the decrease preferably satisfy any of the above ranges. When the above ranges are exceeded, exhaust of the gas is typically required for the product quality.

### EXAMPLES

The following provides a more detailed description of this disclosure based on examples, but this disclosure is not limited by the following examples.

### (Example 1)

### - Anode -

A suspension was prepared by mixing and stirring 99.25 parts by mass of nickel oxide powder, 0.75 parts by mass of cobalt oxide, 2.25 parts by mass of gum arabic, 0.7 parts by mass of carboxyl methylcellulose, 0.001 parts by mass of sodium lauryl sulfate, and 100 parts by mass of water. A spray drying granulator was used to prepare a granulated product from the suspension.

The granulated product was sprayed onto both sides of a nickel porous substrate by plasma spraying. In the plasma spraying, a mixture of argon and nitrogen in the ratio of 1:0.8 was used as the plasma gas. This electrode was set in a quartz tube. The quartz tube was inserted into a tubular furnace, the inside of the quartz tube was heated to 200 °C, and a stream of hydrogen was continuously supplied into the quartz tube for 2 hours in order to reduce the catalyst layer. An anode for water electrolysis having the nickel catalyst layer containing cobalt formed on the surfaces of the nickel porous substrate was produced through the above steps.

### - Cathode -

Used as the conductive substrate was a plain weave mesh substrate obtained by knitting fine wires of nickel having a diameter of 0.15 mm and having a mesh count of 40 mesh. The substrate was subjected to blasting using alumina powder having a weight-average particle diameter of 100 µm or less, was subsequently acid treated for 5 minutes at room temperature in a 6-N hydrochloric acid, and was then rinsed with water and dried.

Next, a palladium nitrate solution (from Tanaka Kikinzoku Kogyo K.K., with palladium concentration of 100 g/L) and a dinitrodiammine platinum nitric acid solution (from Tanaka Kikinzoku Kogyo K.K., with platinum concentration of 100 g/L) were mixed at a molar ratio of palladium to platinum of 1:1 to prepare a first coating liquid.

A bat containing the first coating liquid was placed at the bottom of the coating roll, the coating liquid was impregnated into an EPDM coating roll, a roll was placed on the top so that the roll and the coating liquid were always in contact with each other, and further, a PVC roller was placed thereon, and the coating liquid was applied to the conductive substrate (roll method). Before the coating liquid being dried, the conductive substrate was quickly passed between two EPDM sponge rolls to remove by suction the coating liquid accumulating at intersections of the mesh of the conductive substrate. Thereafter, the conductive substrate was dried at 50 °C for 10 minutes to form a coating layer, and was then heated and sintered at 500 °C for 10 minutes using a muffle furnace to thermally decompose the coating layer. The application and the thermal decomposition were repeated twice to form a first layer.

Next, an iridium chloride solution (from Tanaka Kikinzoku Kogyo K.K., with iridium concentration of 100 g/L) and a dinitrodiammine platinum nitric acid solution (from Tanaka Kikinzoku Kogyo K.K., with platinum concentration of 100 g/L) were mixed at a molar ratio of iridium to platinum of 0.73:0.27 to prepare a second coating liquid. The second coating liquid was applied by a roll method onto the substrate on which the first layer had been formed, dried, and thermally decomposed in the same manner as in the first layer. The drying temperature was 50 °C and the thermal decomposition temperature was 500 °C. The procedure was repeated twice to form a second layer. Further, post-heating was performed in an air atmosphere at 500 °C for 1 hour to prepare a test cathode.

### - Partition wall and outer frame -

As a bipolar element, one having a partition wall partitioning an anode and a cathode and an outer frame surrounding the partition wall was used. Those members in contact with the electrolytic solution, such as the partition wall and the frame of the bipolar element, were all made of nickel.

### - Conductive elastic body -

A woven metal fabric of nickel wires was corrugated to be used as a conductive elastic body.

### - Membrane -

Zirconium oxide (trade name "EP Zirconium Oxide", from Daiichi Kigenso Kagaku Kogyo Co., Ltd.) and N-methyl-2-pyrrolidone (from Wako Pure Chemical Industries, Ltd.) were placed into a ball mill pot having a capacity of 1000 mL and containing SUS balls with a particle size of 0.5 mm. These were stirred together at a rotation speed of 70 rpm for 3 hours and dispersed to obtain a mixture. The resulting mixture was filtered through a stainless steel mesh (mesh count: 30 mesh) to separate the balls from the mixture. Polysulfone (Udel^{®} from Solvay Advanced Polymers, Udel is a registered trademark in Japan, other countries, or both) and polyvinylpyrrolidone (from Wako Pure Chemical Industries, Ltd., weight-average molecular weight (Mw): 900,000) were added to the mixture from which the balls had been separated, and stirred with a three-one motor for 12 hours and dissolved to obtain a coating liquid having the following composition:
polysulfone: 15 parts by mass
polyvinylpyrrolidone: 6 parts by mass
N-methyl-2-pyrrolidone: 70 parts by mass
zirconium oxide: 45 parts by mass

The coating liquid was applied to both surfaces of a polyphenylene sulfide mesh (from Clever Co., Ltd., film thickness: 280 µm, mesh opening: 358 µm, and fiber diameter: 150 µm) as a substrate using a comma coater to obtain a coating thickness of 150 µm per surface. Immediately after the coating, the substrate coated with the coating liquid was exposed to vapor from the coagulation bath stored with a pure water/isopropanol mixed solution at 30 °C (a solution of pure water/isopropanol = 50/50 (v/v) from Wako Pure Chemical Industries, Ltd.). Immediately thereafter, the substrate coated with the coating liquid was immersed in the coagulation bath. Then, by coagulating polysulfone, a coating film was formed on the surface of the substrate. Thereafter, the coating film was thoroughly rinsed with pure water to obtain a porous membrane.

The average water permeable pore size of this porous membrane was 0.3 µm at 90 °C. The thickness was 580 µm. The average pore size on the surface of the porous membrane was 2.3 µm.

### - Gasket -

The gasket used had a quadrangular shape with a thickness of 4.0 mm, a width of 18 mm, and an inner size of 504 mm square, contained an opening having the same size as the electrode compartment in plan view, and had a slit structure for holding by inserting the membrane therethrough. In the slit structure, a gap of 0.4 mm was provided at the center portion in the thickness direction of the inner wall of the opening to hold the partition wall by inserting the partition wall therethrough. This gasket was made of EPDM rubber and had a tensile stress of 4.0 **MP**a at 100 % deformation.

### - Zero-gap type bipolar element -

The zero-gap cell unit 60 of external header type has a rectangular shape of 540 mm × 620 mm, and the area of the current-carrying surface of the anode 2a and the cathode 2c is 500 mm × 500 mm. On the cathode side, the zero-gap bipolar element 60 comprises: a cathode 2c, a conductive elastic body 2e, and a cathode current collector 2r that are stacked on top of one another and connected to a partition wall 1 via a cathode rib 6; and a cathode compartment 5c in which the electrolytic solution flows. On the anode side, the zero-gap bipolar element 60 comprises: an anode 2a that is connected to a partition wall 1 via an anode rib 6; and an anode compartment 5a in which the electrolytic solution flows (FIG. 3).

The depth of the anode compartment 5a (the anode compartment depth, in FIG. 3, the distance between the partition wall and the anode) was 25 mm, the depth of the cathode compartment 5c (the cathode compartment depth, in FIG. 3, the distance between the partition wall and the cathode current collector) was 25 mm, and the material was nickel. The partition wall 1 was made of nickel and obtained by welding the anode rib 6 made of nickel having a height of 25 mm and a thickness of 1.5 mm and the cathode rib 6 made of nickel having a height of 25 mm and a thickness of 1.5 mm. The thickness of the partition wall 1 was 2 mm.

As the cathode current collector 2r, a nickel-expanded metal substrate subjected to blasting in advance was used. The thickness of the substrate was 1 mm and the aperture ratio was 54 %. The conductive elastic body 2e was fixed by spot-welding on the cathode current collector 2r. By stacking these zero-gap bipolar elements on top of one another via the gasket holding the membrane, it is possible to form a zero-gap structure Z in which the anode 2a and the cathode 2c are pressed against the membrane 4.

The electrolytic solution was made to flow into the cathode compartment 5c through the cathode inlet header, and to flow out of the cathode compartment 5c through the cathode outlet header. Further, the electrolytic solution was made to flow into the anode compartment 5a through the anode inlet header, and to flow out of the anode compartment 5a through the anode outlet header.

The cathode electrolytic solution inlet was connected to one end side on the lower side of an outer frame which was rectangular in plan view, and the cathode electrolytic solution outlet was connected to the upper side of the side extending to the other end side on the lower side of the outer frame 3 which was the rectangular in plan view. The cathode electrolytic solution inlet and the cathode electrolytic solution outlet were provided in the electrode compartment 5 which was rectangular in plan view so as to face each other centering around the center portion of the electrode compartment 5 of the electrode compartment 5. The electrolytic solution flowed from the bottom toward the top while being angled relative to the vertical direction to rise along the electrode surfaces.

The bipolar electrolyzer 50 of this example was configured so that the electrolytic solution flowed to the anode compartment 5a and the cathode compartment 5c through the electrolytic solution inlets of the anode compartment 5a and the cathode compartment 5c, and the electrolytic solution and generated gases flowed out of the electrolyzer 50 through the electrolytic solution outlets of the anode compartment 5a and the cathode compartment 5c.

Since electrolysis produced hydrogen gas in the cathode compartment 5c and oxygen gas in the anode compartment 5a, there was formed a mixed-phase flow of the electrolytic solution and the hydrogen gas in the cathode outlet header and a mixed-phase flow of the electrolytic solution and the oxygen gas in the anode outlet header.

The bipolar electrolyzer was fabricated by the following procedure.

The cathode terminal element was prepared by attaching a cathode to a cathode terminal frame. The anode terminal element was prepared by attaching an anode to an anode terminal frame.

Nine bipolar elements were prepared. Further, one cathode terminal element and one anode terminal element were prepared.

A gasket was attached to each metal frame portion of the bipolar elements, the cathode terminal element, and the anode terminal element.

One membrane was sandwiched between the anode terminal element and the cathode side of a bipolar element. The nine bipolar elements were arranged in series so that the anode side of one of two adjacent bipolar elements and the cathode side of the other bipolar element faced each other, and eight membranes were sandwiched between the adjacent bipolar elements to form a zero gap structure in which the cathodes and the anodes were pressed against the membranes. Further, a membrane was sandwiched between the anode side of the ninth bipolar element and the cathode terminal element. A bipolar electrolyzer was formed by using a fast head, insulating plates, and a loose head, and tightening the structure by applying a pressure with a press machine.

A water electrolysis system as illustrated in FIG. 1 was prepared using a feed pump, gas-liquid separation tanks, and component that were generally used in the relevant technical field. Two power supplies, namely, a feed power supply and an auxiliary power supply, were provided and connected independently to the anodes and cathodes of the electrolyzer (FIG. 1).

Water electrolysis was carried out using this water electrolysis system by supplying electric power from the feed power supply such that an electric current density in terms of the projected area of the membrane was 6000 A/m² and the integral value of the electric current density was 21.6 MC/h/m².

After 2 hours passed, gas was recovered from the cathode side gas-liquid separation tank and was analyzed. The volume ratio of hydrogen to the total amount of the gas (taken to be 100 volume%) was 99.99 volume% or more, the volume ratio of oxygen to the total amount of the gas (taken to be 100 volume%) was 0.001 volume% or less, and the volume ratio of nitrogen gas was 5 ppm by volume or less.

Further, gas was recovered from the anode-side gas-liquid separation tank and was analyzed. The volume ratio of oxygen to the total amount of the gas (taken to be 100 volume%) was 99.99 volume% or more, the volume ratio of hydrogen to the total amount of the gas (taken to be 100 volume%) was 0.001 volume% or less, and the volume ratio of nitrogen gas was 5 ppm by volume or less.

The electric power was decreased to 10 W/m²/cell, and was supplied to the electrolyzer for consecutive 60 seconds to simulate the situation of a decrease in the supplied electric power.

The power supply was switched after the decrease was established (after 60 seconds passed), and a constant current was supplied from the auxiliary power supply to the electrolyzer for 1 hour such that the electric current density in terms of the projected area of the membrane was 11 A/m² and the integral value of the electric current density was 39.6 kC/h/m²/cell. Note that no nitrogen gas was supplied to the water electrolysis system. In addition, the liquid feed pump of the water electrolysis system was stopped after the decrease was established.

After 1 hour passed after the decrease, gas was recovered from the cathode side gas-liquid separation tank and was analyzed. The volume ratio of hydrogen to the total amount of the gas (taken to be 100 volume%) was 99.99 volume% or more, the volume ratio of oxygen to the total amount of the gas (taken to be 100 volume%) was 0.001 volume% or less, and the volume ratio of nitrogen gas was 4 ppm by volume or less.

Further, gas was recovered from the anode-side gas-liquid separation tank and was analyzed. The volume ratio of oxygen to the total amount of the gas (taken to be 100 volume%) was 99.99 volume% or more, the volume ratio of hydrogen to the total amount of the gas (taken to be 100 volume%) was 0.001 volume% or less, and the volume ratio of nitrogen gas was 4 ppm by volume or less.

### (Example 2)

Hydrogen was produced in the same manner as in Example 1 except that the power supplied from the auxiliary power supply to the electrolyzer after the decrease was established was changed to the conditions described in Table 1 and the temperature of the electrolytic solution was changed to 55 °C.

The results are listed in Table 1.

### (Comparative Example 1)

Hydrogen was produced in the same manner as in Example 1 except that no electric power was supplied to the electrolyzer after the decrease was established.

The results are listed in Table 1.

### (Comparative Example 2)

Hydrogen was produced in the same manner as in Example 1 except that the power supplied from the auxiliary power supply to the electrolyzer after the decrease was established was changed to the conditions described in Table 1.

The results are listed in Table 1.

### (Comparative Example 3)

Hydrogen was produced in the same manner as in Comparative Example 2 except that nitrogen gas (having a purity of 99%) purge was carried out after the decrease was established to purge the electrolyzer with the N² gas purity.

The results are listed in Table 1.

### (Comparative Example 4)

Hydrogen was produced in the same manner as in Comparative Example 1 except that the temperature of the electrolytic solution was adjusted to 20 °C, and that electric power was supplied while the tubing pump of the water electrolysis system was operated under the same condition as the condition before the decrease.

The results are listed in Table 1.

**Table 1**

| | | | | Example 1 | Example 2 | Example 3 | Comparative Example 1 | Comparative Example2 | Comparative Example3 | Comparative Example4 |
|---|---|---|---|---|---|---|---|---|---|---|
| Hudrogen production method | Power supplied before decrease | Electric power density | W/m²/cell | 12000 | 12000 | 12000 | 12000 | 12000 | 12000 | 12000 |
| | | Electric current density | A/m² | 6000 | 6000 | 6000 | 6000 | 6000 | 6000 | 6000 |
| | | Integral value of electric current density | MC/h/m²/cell | 21.6 | 21.6 | 21.6 | 21.6 | 21.6 | 21.6 | 21.6 |
| | Conditions of decrease | Electric power density | W/m²/cell | 10 | 10 | 10 | 10 | 10 | 10 | 10 |
| | | Time | Seconds | 60 | 60 | 60 | 60 | 60 | 60 | 60 |
| | Power supplied upon decrease | Electric current density | A/m² | 11 | 1500 | 3000 | 0 | 8 | 8 | 0 |
| | | Integral value of electric current density | kC/h/m²/cell | 39.6 | 5400 | 10800 | 0 | 28.8 | 28.8 | 0 |
| | | Waveform | - | Constant Electric | Constant Electric | Constant Electric | - | Constant Electric | Constant Electric | - |
| | | Supply time duration | hours | 1 | 1 | 1 | 1 | 1 | 1 | 1 |
| | | N₂ purge | - | No | No | No | No | No | Yes | No |
| | | Tubing pump | - | Stopped | Stopped | Stopped | Stopped | Stopped | Stopped | Operated |
| | Range of power difference (Note 1) | | % | 0.18 | 25.00 | 50.00 | 0.00 | 0.13 | 0.13 | 0.00 |
| Evaluations | Items common in electrolyzer | Internal pressure | kPa | 50 | 50 | 50 | -10 | 50 | 50 | 50 |
| | | Temperature of electrolytic solution | °C | 23 | 55 | 70 | 20 | 22 | 22 | 20 |
| | Gas on cathode side | Volume ratio of H₂ | vol.% | ≥ 99.99 | ≥ 99.99 | ≥ 99.99 | 98 | 99.5 | 70 | 99.5 |
| | | Volume ratio of O₂ | vol.% | ≤ 0.001 | ≤ 0.001 | ≤ 0.001 | 0.5 | 0.5 | 0 | 0.5 |
| | | Volume ratio of N₂ | - | 4 ppm by vol. or less | ≤ 0.001 vol.% | ≤ 0.001 vol.% | 1.5 vol.% | 4 ppm by vol. or less | 30 vol.% | 4 ppm by vol. or less |
| | Gas on anode side | Volume ratio of H₂ | vol.% | ≥ 99.99 | ≤ 99.99 | ≤ 99.99 | 97.5 | 97.9 | 35 | 98 |
| | | Volume ratio of O₂ | vol.% | ≤ 0.001 | ≤ 0.001 | ≤ 0.001 | 0 | 2.1 | 0 | 2 |
| | | Volume ratio of N₂ | - | 4 ppm by vol. or less | ≤ 0.001 vol.% | ≤ 0.001 vol.% | 2.5 vol.% | 4 ppm by vol. or less | 65 vol.% | 4 ppm by vol. or less |

| | | | | | | | | | | |
|---|---|---|---|---|---|---|---|---|---|---|
| (Note 1) Range of power difference (%) = Electric current density supplied upon decrease / electric current density supplied before decrease × 100 | | | | | | | | | | |

The qualities of the gases before the electric power was decreased were analyzed in all of Examples and Comparative Examples in the same manner as in Example 1. Note that water electrolysis was carried out for 24 hours, and a constant electric power was supplied from the feed power supply except the duration when electric power was supplied from the auxiliary power supply for consecutive 1 hour under the above-described conditions.

Further, after the supply of the electric power upon the decrease, the same electric power as that before the decrease was supplied again and the qualities of the gases were analyzed 10 minutes thereafter. In Examples 1 and 2, the purities of the gases remained the same as the purities of the gases before the decrease of the electric power. In Comparative Examples 1 to 4, the volume ratio of hydrogen in the gas on the cathode side and the volume ratio of oxygen in the gas on the anode side were low. In addition, in Comparative Example 3, nitrogen gas remained in the cathode and anode gases.

### REFERENCE SIGNS LIST

1 Partition wall
2 Electrode
2a Anode
2c Cathode
2e Conductive elastic body
2r Current collector
3 Outer frame
4 Membrane
5 Electrode compartment
5a Anode compartment
51c Cathode compartment
6 Rib
7 Gasket
10 Header
50 Electro lyzer
51g Fast head and loose head
51i Insulating plate
51a Anode terminal element
51c Cathode terminal element
51r Tie rod
60 Bipolar element
65 Electrolytic cell
70 Water electrolyzer system
71 Electrolytic solution circulating pump
72 Gas-liquid separation tank
72h Cathode-side gas-liquid separation tank (hydrogen separation tank)
72o Anode-side gas-liquid separation tank (oxygen separation tank)
73 Electrolytic solution controller
741 Feed power supply
742 Auxiliary power supply
743 Detector
744 Auxiliary power supply controller
745 Electric current meter
75 Densitometer
76 Densitometer
77 Flow meter
78 Pressure gauge
79 Heat exchanger
80 Pressure control valve
81 Piping

## Claims

1. A hydrogen production method for producing hydrogen through electrolysis of water containing alkali by a water electrolysis system comprising an electrolyzer and a power supply for supplying an electric power to the electrolyzer, the method comprising:
supplying the electric power to the electrolyzer such that an electric current density is 10 Am⁻² or more and less than 1500 Am⁻² in terms of a projected area of a membrane, and an integral value of the electric current density applied is 2000 Ch⁻¹m⁻² or more and 54000 kCh⁻¹m⁻² or less, when the electric power supplied to the electrolyzer decreases.

2. The hydrogen production method according to claim 1, wherein the electric power supplied to the electrolyzer decreases for at least 1 hour or longer within 24 hours.

3. The hydrogen production method according to claim 1 or 2, wherein
the decrease in the electric power supplied to the electrolyzer is a state satisfying at least one selected from the group consisting of:
a state in which an electric power of less than 100 Wm⁻²Cell⁻¹ is supplied to the electrolyzer for at least consecutive 60 seconds;
a state in which the electric power decreases at a rate of 10 Ws⁻¹m⁻²Cell⁻¹ or more and an electric power of less than 100 Wm⁻²Cell⁻¹ is supplied to the electrolyzer after the decrease; and
a state in which an electric power of which integral value for 60 seconds is less than 6000 Wsm⁻²Cell⁻¹ is supplied to the electrolyzer.

4. The hydrogen production method according to any one of claims 1 to 3, wherein
the electric current density upon the decrease in the electric power supplied to the electrolyzer is 0.15% to 50% of that of the electric power supplied before the decrease.

5. The hydrogen production method according to any one of claims 1 to 3, wherein
the electric current density upon the decrease in the electric power supplied to the electrolyzer is 0.15% to 25% of that of the electric power supplied before the decrease.

6. The hydrogen production method according to any one of claims 1 to 5, wherein the electric power supplied before the decrease is such that the electric current density is 100 Am⁻² or more in terms of the projected area of the membrane, and the integral value of the electric current density applied is 3600 kCh⁻¹m⁻² or more.

7. The hydrogen production method according to any one of claims 1 to 6, wherein the power supply comprises at least two power supplies, and a power supply for supplying the electric power to the electrolyzer is switched upon the decrease.

8. The hydrogen production method according to any one of claims 1 to 7, wherein an output from the power supply for supplying the electric power upon the decrease is a constant current.

9. The hydrogen production method according to any one of claims 1 to 7, wherein an output waveform from the power supply for supplying the electric power upon the decrease is a square wave.

10. The hydrogen production method according to any one of claims 1 to 7, wherein the output waveform from the power supply for supplying the electric power upon the decrease is a sine wave.

11. The hydrogen production method according to any one of claims 1 to 7 and 10, wherein the power supply for supplying the electric power upon the decrease is a power supply relying on a solar power output.

12. The hydrogen production method according to any one of claims 1 to 7 and 10, wherein the power supply for supplying the electric power upon the decrease is a power supply relying on a wind power output.

13. The hydrogen production method according to any one of claims 1 to 12, wherein the power supply for supplying the electric power before the decrease is a power supply relying on at least one renewable energy output selected from the group consisting of wind, solar, hydraulic, tidal, wave, ocean current, and geothermal power outputs.
